# EUROPÄISCHE PATENTANMELDUNG

(11) **EP 0 950 811 A2**
(43) Veröffentlichungstag der Anmeldung: **20.10.1999**
(21) Anmeldenummer: 99100939.0
(22) Anmeldetag: 16.01.1999
(51) Int. Cl.: F02N 15/02, F02N 11/00

(54) **Startvorrichtung für Modellstrahlturbinen**

(30) Priorität: 16.01.1998 DE 29800669 U
(71) Anmelder: INGENIEURBURO CAT, M. ZIPPERER GMBH, D-79219 Staufen (DE)
(72) Erfinder: Zipperer, Markus, 79219 Staufen (DE)

(57) **Zusammenfassung**

Die Erfindung betrifft eine Startvorrichtung zum Anlassen/Starten von Modellturbinen.
Das Ziel dieser Erfindung wird dadurch erreicht, daß die Modellturbine ohne fremde Hilfe gestartet werden kann. Das Ein- und Auskuppeln des Startmotors erfolgt durch eine am Startmotor befestigte Fliehkraftkupplung. Während des Laufs der Modellturbine entstehen keine Beeinträchtigungen durch die Startvorrichtung. Im Fall einer Außengebietslandung kann die Modellturbine mittels der Startvorrichtung gekühlt werden. Für den Fall, daß die Turbine während des Fluges abgewürgt wird, kann sie mittels der Startvorrichtung wieder gestartet werden. Die Startvorrichtung erlaubt einen optimalen Einbau der Modellturbine in das jeweilige Flugmodell. Konstruktionsgrenzen werden durch diese Startvorrichtung völlig eliminiert.

## Beschreibung

Die Erfindung betrifft eine Startvorrichtung zum Anlassen/Starten von Modell-Strahltriebwerken bzw. Kleingasturbinen, wie sie insbesondere zum vorbildgetreuen Antrieb von Flugmodellen eingesetzt werden.
Zum Starten bzw. Anlassen dieser Modell-Gasturbinen sind verschiedene Verfahren bekannt:
A. Start mittels Preßluft.
   Zum Erreichen der Start- bzw. Haltedrehzahl der Turbine wird hierbei das Laufsystem der Gasturbine durch Einblasen Von hochverdichteter Luft auf die notwendige Drehzahl gebracht. Die hierzu notwendige komprimierte Luft wird in der Praxis meist über Preßluftflaschen ( 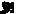 Taucherflaschen") zur Verfügung gestellt Der Nachteil dieser Methode besteht darin, daß zum hobbymäßigen Betrieb der Gasturbine immer die relativ schwere und sperrige Preßluftflasche mitzuführen ist. Auch ist die mögliche Anzahl der Starts durch die nur begrenze vorhandene Preßluftmenge eingeschränkt. Ist die Preßluftflasche einmal leer, ist kein weiterer Start mehr möglich und die Flasche muß zuerst bei einem Dienstleister (Taucherfachgeschäft, Feuerwehr) wieder aufgefüllt werden. Zudem müssen die Preßluftflaschen in regelmäßigem Abstand gewartet sowie TÜV - abgenommen werden.
B. Start mittels eines Gebläses bzw. Ventilators.
   Hierbei wird das Turbinenlaufsystem durch Einblasen von mittels einem Ventilator beschleunigter Luft auf die notwendige Drehzahl gebracht. Die von dem meist elektrisch betriebenen Ventilator beschleunigte Luft wird in den Turbineneinlaß geblasen und setzt so das Laufsystem der Turbine in Rotation. Der Nachteil dieser Methode besteht darin, daß der vom Ventilator erzeugte Luftstrom auf relativ großem Querschnitt zum Turbineneinlaß geführt werden muß. Das bedingt in der Praxis die Notwendigkeit eines freien Zugangs zur Turbine bzw. zum Turbineneinlaß. Dies ist jedoch beim Einbau der Turbine in Modellflugzeuge meist nur schwer oder überhaupt nicht realisierbar. Ein fester Einbau des Ventilators direkt vor der Turbine, scheidet in vielen Fällen aus, da nach dem Start der Turbine die Luftzufuhr durch den sich ständig im Ansaugluftstrom befindlichen Anlaßventilator, beeinträchtigt wird.

Weiterhin ist es notwendig die Turbine unmittelbar nach dem Ausschalten nachzukühlen um lagerschäden durch Überhitzung der sehr teuren Hochgeschwindigkeitskugellager zu vermeiden. Dieser Nachkühlvorgang wird bisher ebenfalls mittels Anblasen der Turbine durch Preßluft oder einen Ventilator bewerkstelligt. Erfolgt jedoch eine 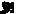 Außenlandung" des Flugmodells, ist der Nachkühlvorgang oft nicht unmittelbar nach dem Abstellen der Turbine durchführbar, und lagerschäden durch Überhitzung sind sehr wahrscheinlich.

Der Erfindung liegt die Aufgabe zugrunde, eine Startvorrichtung für Modellstrahltriebwerke zu entwickeln, welche die genannten Mängel bzw. Nachteile beseitigt und einen sicheren und einfach zu handhabenden Start der Modellstrahlturbine ermöglicht, und ein sofortiges Nachkühlen nach dem Ausschalten der Turbine problemlos möglich wird.

Mit der Erfindung wird erreicht, daß die Turbine im Modell gestartet werden kann ohne von außen zuzuführende Hiffsmittel. Das Ein- und Auskoppeln des Anlassermotors erfolgt selbständig durch Ein- bzw. Ausschalten desselben. Während des Betriebes der Strahlturbine entstehen keine Beeinträchtigungen durch den Anlasser. Im Falle einer Außenlandung des Modells kann die Turbine automatisch nachgekühlt werden. Im Falle eines Triebwerkaussetzers 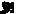 Flame out" kann die Turbine auch im Flug wieder angelassen werden. Es ergibt sich ein optimaler Einbau der Turbine in das Modell. Bauliche Einschränkungen durch die Startmethode entfallen gänzlich.

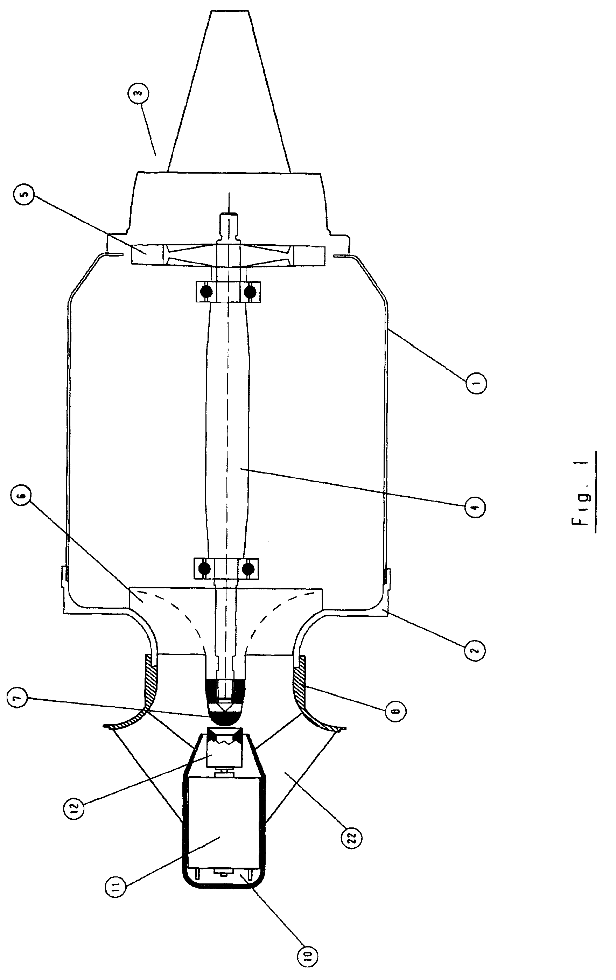

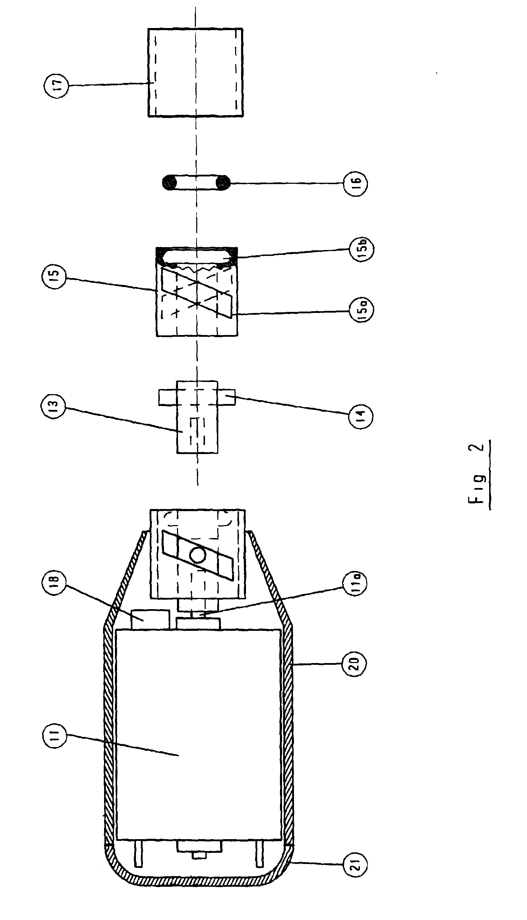

Ein Ausführungsbeispiel der Erfindung wird anhand der Figuren 1 und 2 erläutert.
Es zeigen Figur 1 ein Modellstrahltriebwerk üblicher Bauart mit Turbinengehäuse (1), Verdichterdeckel (2), Auslaß (3), Turbinenwelle (4), Verdichterrad (5) und Turbinenrad (6).
An diese Turbine wird über den Einlaßtrichter (8) mit Rippen (22) die Startvorrichtung (10) bestehend aus Gehäuse (20), Gehäusedeckel (21), Elektromotor (11) und Kupplungshälfte (12) angeflanscht. Die Verdichtermutter (7) bildet die zweite Hälfte und hat eine kugelförmige oder konische vordere Form, um den Kupplungsvorgang günstig zu gestalten. Die Achsen von Turbinenwelle (4) und Elektromotor (11) fluchten. Die Kupplung (12) ist in Ruhestellung, d.h., der Startermotor ist ausgekuppelt. Erfolgt nun eine Längsbewegung dieser Startvorrichtung auf die Turbine zu, so koppelt die Kupplung (12) an der Verdichtermutter (7) über Friktion an, eine Bewegung weg von der Verdichtermutter (7) bewirkt das Auskoppeln.

Eine besonders vorteilhafte Ausgestaltung der Erfindung wird in Figur 2 dargestellt. Das linke Bild zeigt die Kupplungshälfte (12) mit selbsttätiger Schraubkupplungsfunktion, funktionsfertig auf der Welle (11a) des Elektromotors (11) montiert. Rechts daneben sind als Explosionszeichnung die verschiedenen Bauteile dieser Kupplungshälfte noch einmal dargestellt. Auf die Welle (11a) von Elektromotor (11) wird der Mitnehmer (13) mit Querstift (14) montiert Die Schraubkupplungsfunkion entsteht dadurch, daß sich der Querstift (14) in den gewindeähnlichen Schlitzen (15a) der Kupplungsmuffe (15) gleitend bewegt und sich aufgrund seiner Massenträgheit beim Einschalten des Elektromotors (11) nach vome schraubt, d.h. vom Elekromotor weg bewegt und gegen die als zweite Kupplungshälfte eingesetzte Verdichtermutter (7) gedrückt wird. Durch diesen Kupplungsvorgang werden die Turbinenwelle (4) mit Verdichterrad (5) und Turbinenrad (6) von Elektromotor (11) in Rotation gesetzt. Wird der Elektromotor (11) durch Kurzschließen scharf abgebremst oder wird die Drehzahl der Turbine größer als die des Electromotors (11), so bewegt sich die Kupplungsmuffe (15) zurück, d.h. auf den Elektromotor (11) zu, womit die Kupplung geöffnet wird. Eine entsprechende Materialpaarung zwischen Kupplungsmuffe (15) und Verdichtermutter (7) gewährleistet einen verschleißarmen, beliebig oft wiederholbaren Kupplungsvorgang. Zur Verbesserung der Reibverhältnisse kann ein O-Ring (16) oder ein anderes geeignetes Gummi- oder Kunststoffteil in die Ausnehmung (15b) der Kupplungsmuffe (15) so eingesetzt werden, daß dieses Teil die Friktionsarbeit leistet und bei Verschleiß ausgetauscht werden kann. Ein Schutzring (17) wird über die Kupplungsmuffe (15) geschoben werden, um ein mögliches Verschmutzen und Schwergängigwerden zwischen Mitnehmer (13) mit Querstift (14) und Kupplungsmuffe (15) zu verhindern. Um die Startvorrichtung in allen Lagen der Strahlturbine während des Betriebes sicher ausgekuppelt zu halten wird ein Permanentmagnet (18) angebracht, der den Schutzring (17), welcher in diesem Fall aus ferromagnetischem Werkstoff bestehen sollte, in die Parkposition holt und hält.

## Patentansprüche

1. Startvorrichtung für Modellstrahlturbinen dadurch gekennzeichnet, daß in gedachter Verlängerung der Turbinenwellenachse (4) ein schnelldrehender Motor mit einer Kupplungshälfte angeordnet ist, und diese mit einer zweiten Kupplungshälfte auf der Turbinenwelle (4) eine Kupplung bildet, welche durch Axialbewegung ein- bzw. auskuppelt.

2. Startvorrichtung für Modellstrahlturbinen nach Anspruch 1 dadurch gekennzeichnet, daß ein Elektromotor (11) über eine in Achsrichtung bewegliche Kupplung eine achsgleich montierte Stahlturbine in Rotation versetze.

3. Startvorrichtung nach Anspruch 1 oder 2 dadurch gekennzeichnet, daß der Elekromotor (11) eine durch Massenträghelt entlang der Achsrichtung bewegliche Schraubenkupplung (12) besitzt, die sich beim Start des Elektromotors in Richtung der Verdichtermutter (7) der Turbinenwelle (4) bewegt und mit dieser eine Reibkupplung bildet, wodurch das Turbinenlaufsystem in Rotation versetzt wird.

4. Startvorrichtung nach Anspruch 1 bis 3 dadurch gekennzeichnet, daß die Kupplungsmuffe (15) einen auswechselbaren O-Ring (16) als Friktionselement aufweist.

5. Startvorrichtung nach Anspruch 1 bis 3 dadurch gekennzeichnet, daß die Verdichtermutter (7) einen auswechselbaren O-Ring als Friktionselement aufweist.

6. Startvorrichtung nach Ansprüchen 4 und 5 dadurch gekennzeichnet, daß anstelle des O-Ringes ein speziell geformtes Bauteil, welches aus Gummi, Kunststoff oder speziell zur Friktionsübertragung geeignetem Material besteht, eingesetzt ist.

7. Startvorrichtung nach Anspruch 1 bis 3 dadurch gekennzeichnet, daß zum sicheren Entkuppeln ein Magnet eingesetze wird, der die bewegliche Kupplung zurückholt und im größten Abstand zur Verdichtermutter (7) hält.

8. Startvorrichtung nach Anspruch 1 bis 3 dadurch gekennzeichnet, daß dem Elektromotor (11) zum Erreichen einer ausreichend hohen Antriebsdrehzahl ein Übersetzungsgetriebe nachgeschaltet ist.

9. Startvorrichtung nach Anspruch 1 und 2 dadurch gekennzeichnet, daß der Kupplungsvorgang mit Hilfe eines Elektromagneten erfolgt.

10. Startvorrichtung nach Anspruch 1 und 2 dadurch gekennzeichnet, daß der Kupplungsvorgang mit Hilfe eines kleinen Servomotors erfolgt.

11. Startvorrichtung nach Ansruch 1 und 2 dadurch gekennzeichnet, daß der Kupplungsvorgang mit Hilfe eines Preßluftzylinders erfolgt.

12. Startvorrichtung nach Anspruch 1 bis 3 dadurch gekennzeichnet, daß anstelle eines Electromotors ein Preßluftmotor verwendet wird.

13. Startvorrichtung nach einem der obigen Ansprüche, dadurch gekennzeichnet, daß die Steuerung der Startvorrichtung mit Hilfe einer speziellen Steuerelekronik, welche auch den Betrieb der Gasturbine überwacht und regelt, erfolgt.
